# EUROPÄISCHE PATENTSCHRIFT

(11) **EP 2 158 820 B1**
(45) Veröffentlichungstag und Bekanntmachung des Hinweises auf die Patenterteilung: **06.05.2015**
(21) Anmeldenummer: 08015420.6
(22) Anmeldetag: 01.09.2008
(51) Int. Cl.: A46B 9/04, A46B 9/02, A46B 15/00, A46B 3/00

(54) **Zahnbürste und Verfahren zur Herstellung**
Toothbrush and method for its manufacture
Brosse à dents et son procédé de fabrication

(43) Veröffentlichungstag der Anmeldung: 03.03.2010
(60) Teilanmeldung: 15151033.6
(73) Patentinhaber: Braun GmbH, 61476 Kronberg (DE)
(72) Erfinder: Stief, Christian, 60314 Frankfurt (DE); Haas, Martin, 65760 Eschborn (DE); Störkel, Jens, 60433 Frankfurt/Main (DE); Stich, Florian, 65760 Eschborn (DE); Pfeifer, Ulrich, 35516 Münzenberg (DE)
(74) Vertreter: Töpert, Verena Clarita

(56) Entgegenhaltungen:
- WO-A-99/35911
- WO-A-2005/084486
- WO-A-2006/050039
- DE-A1-102004 020 706
- US-A- 3 229 318
- US-A1- 2004 019 990

## Beschreibung

Die vorliegende Erfindung betrifft eine Zahnbürste die einen Handgriff und einen Halsabschnitt aufweist, der den Handgriff mit einem Kopf verbindet, wobei der Kopf eine Reinigungsseite und gegenüberliegend zu dieser eine Rückseite aufweist, wobei die Reinigungsseite mehrere Borstenbüschel zur Zahnreinigung aufweist, die mit einem Anker durch Bestopfungsöffnungen im Kopf befestigbar sind, wobei jeder Bestopfungsöffnung ein Sackloch mit Seitenwandungen und einem Boden zugeordnet ist. Ferner betrifft die Erfindung ein Verfahren zur Herstellung einer solchen Zahnbürste.

Aus der WO 2006/050039 A1 ist ein Zahnbürstenkopf bekannt, bei dem die Sacklöcher unterschiedlich tief von der Reinigungsseite des Kopfes her in den Kopf hinein reichen. Bei Ausbildung gleich langer Borstenbüschel für die jeweiligen Sacklöcher wird auf diese Weise vorgeschlagen eine Topographie der Borstenenden an der Reinigungsseite zu erzeugen.

Aus der DE 102 21 786 A1 ist ebenfalls bekannt Borstenbüschel mit gleicher Länge in Bestopfungssacklöcher in den Kopf einzusetzen, wobei hier eine unterschiedliche Topographie ebenfalls der Borstenenden angestrebt wird, indem die Reinigungsseite des Kopfes schräg ausgebildet ist.

Aus der WO 2008/059435 ist eine Zahnbürste bekannt, die eine LED, teils im Kopf und teils aus diesem herausragend, im Zahnbürstenborstenfeld aufweist.

WO 2005/084486 offenbart eine Zahnbürste mit Borstenbüscheln, die in einem flexiblen Borstenträger befestigt sind.

Es wird angestrebt die Dicke des Zahnbürstenkopfes möglichst gering zu halten, um eine komfortable Nutzung im Mund zu ermöglichen. Demgegenüber steigen jedoch die funktionalen Anforderungen an einen Zahnbürstenkopf, so dass Kopfgeometrien erforderlich werden, die aufgrund ihrer komplexen Innenstruktur eine optisch fehlerfreie Herstellung eines Hartkunststoffspritzlings erschweren. Der im Spritzgießverfahren in das Werkzeug zum Spritzen des Kopfes einfließende Kunststoff ist zwischen den verschiedenen Bestopfungssacklöchern und anderen Ausnehmungen oder Hohlräumen des Spritzlinges Turbulenzen ausgesetzt und fließt daher sehr ungleichmäßig, insbesondere zu Hinterschnitten oder komplexeren Strukturen, die weiter vom Einspritzpunkt entfernt liegen. Dieses Problem wird verschärf, sobald Kunststoffe für den Kopf zum Einsatz kommen, die ein stärkeres Schwindverhalten beim Abkühlen nach dem Spritzgußprozeß aufweisen. Je nach Innenstruktur des Kopfes sind daher optische Fehlstellen oder Einfallstellen, insbesondere auch an der Rückseite des Kopfes, die unerwünschte Folge.

Es ist daher eine Aufgabe der vorliegenden Erfindung, eine Zahnbürste bereitzustellen, die innerhalb des Kopfes eine komplexe Innenstruktur aufweist und dennoch, insbesondere auch bezüglich der Rückseite des Kopfes, optisch einwandfrei herstellbar ist. Es ist ferner eine Aufgabe der vorliegenden Erfindung ein entsprechendes Verfahren bereitzustellen.

Diese Aufgabe wird durch eine Zahnbürste mit den Merkmalen des Anspruchs 1 und durch ein Verfahren mit den Merkmalen des Anspruchs 14 gelöst.

In vorteilhafter Ausbildung der Erfindung hat sich gezeigt, dass durch einen kürzesten Abstand x oder y zwischen einem Boden eines Sackloches, das zur Bestopfung mit Borsten vorgesehen ist und der Rückseite des Kopfes von 0,5 bis 2,5 mm ein dünnerer Zahnbürstenkopf bereitstellbar ist, der komfortabler im Mund zu handhaben ist. Wenn sich zusätzlich die Querschnittsbereiche innerhalb des Kopfes zwischen den Böden und der Rückseite von Sackloch zu Sackloch erheblich unterscheiden und somit eine komplexere Struktur gegeben ist, so ist von Bedeutung, dass im Übergangsbereich zwischen dem Boden des Sackloches und den Seitenwandungen des Sackloches eine Abschrägung oder Verrundung ausgebildet ist, da sich somit ein fehlerfreierer Spritzling erzeugen lässt. Die Größe des Bodens kann dabei beliebig klein werden, wenn der das Sackloch verkleinernde, abgeschrägte oder verrundete Bereich entsprechend größer wird, um nahezu einen Boden auszubilden. Als Querschnittsbereich zwischen Boden und Rückseite des Kopfes wird insbesondere ein Schnitt durch den Kopf angesehen, der das Sackloch durchschneidet und durch den eine Ebene gebildet ist, die senkrecht zur Zahnbürstenlängsache angeordnet ist. Die Zahnbürstenlängsachse erstreckt sich üblicherweise vom Kopfende bis zum Handgriffende der Zahnbürste oder je nach Gesamtgeometrie zumindest vom Kopfanfang benachbart zum Halsabschnitt bis zum Kopfende. Unterschiede im Querschnittsbereich bzw. in den Wanddicken des Spritzlings können durch Aussparungen und Hohlräume im Spritzling, Hinterschnitte oder unterschiedliche Ausbildung der Sacklöcher relativ zueinander entstehen. Natürlich sollen ähnliche Probleme für die Seiten des Kopfes oder die Reinigungsseite oder andere Abschnitte der Zahnbürste in ähnlicher Weise behoben werden.

In weiterer vorteilhafter Ausbildung ist der kürzeste Abstand x und y zwischen dem Boden und der Rückseite des Kopfes mit 0,8 bis 2 mm festgelegt. Insbesondere wenn die Länge der Sacklöcher und damit die Tiefe des Bodens bzw. der Abstand zur Rückseite so aneinander angepasst sind, dass sich in einer komplexen Kopfstruktur etwa gleichmäßig starke Wanddicken ausbilden, so ist gewährleistet, dass eine gleichmäßige Abkühlung im Spritzling nach dem Spritzgussverfahren und damit ein gleichmäßiger Schwund erfolgt. Einfallstellen an stärkeren Materialansammlungen können so vermieden werden. Insbesondere wenn dieser kürzeste Abstand x und y für alle oder die Mehrzahl von Sacklöchern des Kopfes einen Abstand von 0,5 bis 2,5 mm oder 0,8 bis 2 mm zwischen Boden und Rückseite aufweist, ist gewährleistet, dass, je nach sonstiger Innenstruktur des Kopfes, noch ausreichend gleichmäßige Materialstärken im Kopf, trotz einer inhomogenen Innenstruktur, ausgebildet sind, um einen fehlerfreien Spritzling herstellen zu können.

In weiterer vorteilhafter Ausbildung sind dritte und vierte Sacklöcher vorgesehen, die bis zur gleichen Tiefe mit Borsten bestopfbar sind, wobei die dritten und vierten Sacklöcher derart ausgebildet sind, dass sich deren Böden unterschiedlich tief erstrecken. Somit ist ermöglicht, dass die Bestopfungstiefe der Borstenbüschel in die dritten und vierten Sacklöcher gleich ist, aber durch unterschiedliche Tiefenerstreckungen Ausgleichsräume gegen Materialansammlungen und die damit einhergehenden Materialschwundprobleme geschaffen sind.

In weiterer vorteilhafter Ausbildung ist das vierte Sackloch nach der Abschrägung oder Verrundung mit einer Verjüngung (gegenüber der darüberliegenden Seitenwand) und einer sich daran anschließenden weiteren Verrundung oder Abschrägung und erst dann mit dem abschließenden Boden versehen. Die Verjüngung kann somit frei von einer Bestopfung mit Borsten bleiben, so dass, wie oben ausgeführt, eine soweit möglich einheitliche Bestopfungstiefe und damit ein vereinfachter Fertigungsprozeß gegeben ist.

In weiterer vorteilhafter Ausbildung weist der Kopf einen ersten Innenbereich und einen zweiten Innenbereich auf, wobei der erste Innenbereich aus Hartkunststoff ausgebildet ist und der zweite Innenbereich ein elektrisch betreibbares Funktionselement oder einen Teil davon aufweist. Der Kopf ist somit durch eine inhomogene, zerklüftete Innenstruktur gekennzeichnet, wobei durch den zweiten Innenbereich Hohlräume im Spritzling des ersten Innenbereiches vorzusehen sind. Diese zusätzlich zu den Sacklochgeometrien bedingten Hohlraumausbildungen im Kopf führen zu einer erhöhten Komplexität, so dass die Fließbereiche der Kunststoffschmelze während des Spritzgießens im Werkzeug stark verengt, verwinkelt, begrenzt und mit Hinterschnitten ausgebildet sind. Ferner definiert der zweite Innenbereich maximale Materialstärken, die eine gewisse Abkühlzeit für den Kunststoffspritzling festlegen.

In weiterer vorteilhafter Ausbildung ist ein Anspritzpunkt für den Hartkunststoff des Kopfes am Hals oder am Handgriff vorgesehen und die Sacklöcher relativ zueinander unterschiedlich weit axial vom Anspritzpunkt am Kopf entfernt angeordnet, wobei zwischen diesen relativ zueinander unterschiedlich weit angeordneten Sacklöchern im Hartkunststoff des Kopfes ein Freibereich für das Funktionselement vorgesehen ist. Bevorzugt sind somit Sacklöcher sowohl in Spritzrichtung vor, als auch in Spritzrichtung nach dem Freibereich bzw. Hohlraum für das Funktionselement ausgebildet. Zusätzlich können auch seitlich bzw. auch über dem Hohlraum Sacklöcher vorgesehen sein, so dass die Innenstruktur weiter an Komplexität zunimmt und eine genaue Berücksichtigung der Materialstärken bzw. Maßnahmen gegen unerwünschte Schwindungseffekte notwendig sind.

In weiterer vorteilhafter Ausbildung weist der Kopf zumindest ein fünftes Sackloch auf, das benachbart und oberhalb des Funktionselementes bzw. oberhalb des Freibereiches oder oberhalb des zweiten Innenbereiches angeordnet ist und kürzer als die dritten und vierten Sacklöcher ausgebildet ist. Es wird also vorgeschlagen, die Sacklochtiefe an den Stellen im Kopf zu verkürzen, an denen der Freiraum entsprechend zur Ausbildung von Sacklöchern durch andere Hohlräume begrenzt ist. In einer alternativen Ausführungsform sind alle Sacklöcher auf dieses verkürzte Maß einheitlich tief von der Reinigungsseite des Kopfes in den Kopf hinein ausgebildet.

In weiterer vorteilhafter Ausbildung ist die Rückseite des Kopfes aus dem gleichen Hartkunststoff wie die Reinigungsseite ausgebildet. Dies schließt nicht aus, dass dennoch an anderen Stellen im Zweikomponenten- oder Mehrkomponentenspritzgießverfahren der Kopf spritzgegossen wird, wenn z. B. im Reinigungsbereich Elastomerelemente angeformt sein sollen. Die Rückseite bleibt jedoch vorzugsweise zumindest teilweise frei von einer zweiten Kunststoffkomponente, die zwar einerseits optische Fehlstellen am Spritzling kaschieren könnte, andererseits aber zusätzlich zur Dicke des Kopfes aufträgt.

In weiterer vorteilhafter Ausbildung ist der Kopf aus einem Hartkunststoff gebildet, der mehr als 1 % Materialschwund nach dem eigentlichen Spritzguß aufweist. Es wird demzufolge bevorzugt die Materialschwundprobleme, die ab 1 % Materialschwund bereits zu optischen Fehlstellen führen können, nicht durch die Auswahl eines anderen, andere Nachteile mit sich bringenden Hartkunststoffes zu lösen, der ebenfalls im Spritzgießen von Zahnbürstenkörpern gebräuchlich ist, sondern die Innenstruktur des Kopfes an die Erfordernisse des Materialschwundes anzupassen.

In weiterer vorteilhafter Ausbildung ist der Kopf aus Polypropylen (PP-Hartkunststoff) ausgebildet. Polypropylen weist üblicherweise etwa 2 % Materialschwund nach dem Spritzgießverfahren auf.

In weiterer vorteilhafter Ausbildung ist der Kopf aus Polyethylen, POM, SAN oder Copolyester Hartkunststoff ausgebildet.

In weiterer vorteilhafter Ausbildung weist der Kopf erste und zweite Borstenbüschel mit unterschiedlicher Länge vom Sacklochboden bis zum Borstenende vom Reinigungsbereich des Kopfes beabstandet auf, wobei die ersten und zweiten Borstenbüschel etwa gleiche Länge von der Reinigungsseite bis zum Borstenende aufweisen. Alternativ sind die ersten und zweiten Borstenbüschel von der Reinigungsseite bis zum Borstenende mit unterschiedlicher Länge versehen.

In weiterer vorteilhafter Ausbildung ist zumindest ein Sackloch im Kopf vorgesehen, dessen Mittelachse winklig zum Lot auf der Reinigungsseite angeordnet ist. Es sind also Sacklöcher bzw. Bestopfungslöcher im Kopf vorgesehen, die in diesem schräg verlaufen und somit winklig aus dem Kopf heraustretende Borstenbüschel aufnehmen können. Winklige Borstenbüschel erhöhen die Reinigungsleistung der Zahnborsten am Zahn, wobei jedoch die winkligen Sacklöcher, insbesondere bei versetzt winkligen Anordnungen zu erhöhten Turbulenzen der Kunststoffschmelze im Werkzeug des zu erzeugenden Spritzlings führen können.

Die Erfindung betrifft ebenfalls ein Verfahren, bei dem eine Zahnbürste mit den Merkmalen des Anspruchs 1 hergestellt wird.

Weitere Ziele, Vorteile und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine perspektivische Darstellung eines mit Borsten versehenen Kopfes einer Zahnbürste nach der Erfindung,
- Fig. 2: eine Draufsicht auf den Kopf nach Fig. 1 ohne Beborstung,
- Fig. 3: einen Längsschnitt entlang der Linie A-A in Fig. 2 und
- Fig. 4: eine Querschnittsdarstellung entlang der Linie B-B in Fig. 2 mit zusätzlicher Beborstung im Kopf.

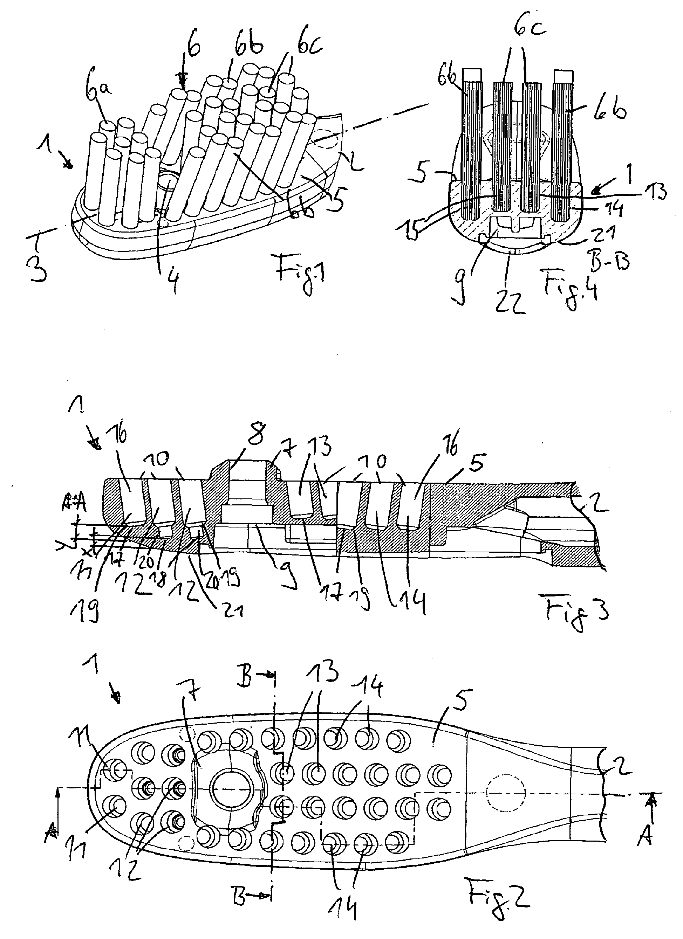

Fig. 1 zeigt in perspektivischer Darstellung den Kopf einer manuellen oder elektrischen Zahnbürste. Der Halsabschnitt der Zahnbürste schließt sich an der Abrisslinie 2 an und ist in den Figuren nicht dargestellt. In weiterer Längserstreckung entlang der Längsachse 3 folgt nach dem Halsabschnitt ein Handgriff der Zahnbürste, in dem gemäß der vorliegenden Ausführungsform elektrische Komponenten aufgenommen sind, um ein elektrisch betreibbares Funktionselement im Kopf mit Energie und den entsprechenden elektrischen Komponenten zu versorgen. Der Handgriff als auch der Halsabschnitt sind hierzu innen vorzugsweise mit Hohlbereichen versehen. Das elektrisch betreibbare Funktionselement ist im vorliegenden Fall vorzugsweise eine LED, die an der Reinigungsseite 5 des Kopfes hervorspringend innerhalb der Borstenbüschel 6 angeordnet ist. Die Reinigungseite 5 ist gemäß der vorliegenden Ausführungsform vorzugsweise planar ausgebildet. Auf der Reinigungsseite sind vordere Reinigungsborsten 6a angeordnet, die benachbart zum distalen Ende des Kopfes 1 positioniert sind. Die vorderen Reinigungsborsten 6a sind nach vorne winklig zur Längsachse 3 ausgerichtet, so dass die hinteren Weisheitszähne besonders gut erreichbar sind. Ferner weist das Borstenfeld zwei Außenreihen mit Borstenbüscheln 6b auf, die gemäß der vorliegenden Ausführungsform zum Handgriff geneigt angeordnet sind. Zwischen diesen Außenreihen mit Borstenbüscheln 6b sind zwei mittlere Borstenreihen vorgesehen mit Borstenbüscheln 6c, die zum distalen Ende des Kopfes 1 hin geneigt angeordnet sind. Es sei angemerkt, dass die Zahnbürste beliebige andere Borstenkonfigurationen oder Mundpflegeelemente in Kombination mit Borstenbüscheln 6 aufweisen kann.

Die Fig. 2 zeigt eine Draufsicht auf den Kopf und damit die Reinigungsseite 5 der Zahnbürste. Die Fig. 3 zeigt einen Längsschnitt entlang der Linie A-A in Fig. 2 und die Fig. 4 zeigt einen Querschnitt entlang der Linie B-B in Fig. 2. In den Figuren 3 und 2 sind die Borstenbüschel 6 nicht dargestellt. In Fig. 4 sind die Borstenbüschel zusätzlich ergänzt. In der vorderen Hälfte des Kopfes 1 ist eine Rampe 7 oder alternativ z. B. ein Elastomerelement (nicht dargestellt) vorgesehen, die/das die LED 4 umgibt. Die zugehörigen Kabelverbindungen sind in den Figuren 2, 3 und 4 nicht dargestellt. Die LED wird in die Montageöffnung 8 innerhalb der Rampe 7 bzw. des Elastomerelementes eingesetzt. Im Inneren des Kopfes schließt sich ein Freibereich 9 bzw. Hohlraum 9 an, in dem die elektrischen Zuführleitungen für das elektrisch betreibbare Funktionselement (hier LED) vorzusehen sind. Der Spritzling des Kopfes 1 weist für diesen Freibereich entsprechende Ausnehmungen auf.

Wie insbesondere aus Fig. 3 hervorgeht, sind zur Aufnahme der Borstenbüschel 6a durch Bestopfungsöffnungen 10 Sacklöcher 11, 12, 13 und 14 vorgesehen. Die Sacklöcher werden mit Borstenbüschel, die ihrerseits aus einer Vielzahl von Borsten bzw. Filamenten bestehen, nach dem so genannten Ankerbestopfungsverfahren (auch Stapling Technologie genannt) bestopft. Dabei wird ein Anker 15 (siehe Fig. 4) mittig in ein Borstenbüschel nach bekannter Art und Weise eingetrieben, der sich im Hartkunststoff des Kopfes setzt, und so eine sichere Befestigung der Borstenbüschel 6 im Kopf gewährleistet. Die Sacklöcher 11, 12, 13 und 14 weisen jeweils Seitenwandungen 16 auf, die die seitlichen Begrenzungsflächen für die Borstenbüschel in den Sacklöchern bilden. Die Sacklöcher definieren so zusammen mit den Seitenwandungen 16 einen zylindrischen Körper. Nach unten im Inneren des Kopfes 1 werden die Sacklöcher begrenzt durch Böden 17 und 18. Die Seitenwandungen 16 werden mit den Böden 17 über Abschrägungen bzw. Verrundungen, die letztlich einen konisch zulaufenden oder kegelstumpfartigen Abschnitt im Sackloch bilden, verbunden. Der Kopf 1 weist Sacklöcher 11, 13 und 14 auf, die ausschließlich durch die Seitenwandungen 16, die daran anschließenden Abschrägungen oder Verrundungen 19 und die Böden 17 seitlich begrenzt werden. Die Borstenbüschel werden etwa bis zu den Böden 17 in den Sacklöchern 11, 13 und 14 bestopft. Die Sacklöcher 12 sind abweichend von den übrigen Sacklöchern mit Verjüngungen 20 versehen, so dass sich für diese Sacklöcher folgende Struktur ergibt. Beginnend bei den Bestopfungsöffnungen 10 der Sacklöcher 12 schließen sich in die Tiefe des Kopfes 1 Seitenwandungen 16 an, an die sich nach unten eine Abschrägung oder Verrundung 19, die ebenfalls, wie bei den anderen Sacklöchern, konisch oder kegelstumpfartig zulaufend ausgebildet ist, anschließt. Im weiteren Tiefenverlauf schließt sich an die Abschrägung oder Verrundung 19 ein verjüngter Abschnitt 20 an, der in diesem Fall ebenfalls hohl, zylindrisch, jedoch mit kleinerem Durchmesser als durch die Seitenwandung 16 gegeben ausgebildet ist. An diesen verjüngten Abschnitt schließt sich wiederum eine weitere Abschrägung oder Verrundung an, die die Verjüngung mit dem Boden 18 der Sacklöcher 12 verbindet. Die Verjüngung kann auch durch andere Geometrien, wie z. B. einen Kegelstumpf, Kegel, Konus oder gekrümmte Flächen gebildet werden. Die Bestopfung der Sacklöcher 12 erfolgt abweichend von den übrigen Sacklöchern nicht bis zum Boden, sondern nur bis zur ersten Abschrägung oder Verrundung 19, die sich etwa auf gleicher Tiefenerstreckung wie die Abschrägung oder Verrundung 19 der benachbarten Sacklöcher 11 befindet. Somit ist für die vordere Gruppe aus Borstenbüscheln 6a des Kopfes 1 eine gleichmäßige Bestopfungstiefe im Kopf 1 gegeben, so dass der Herstellprozeß hierfür vereinfacht ist. Die Verjüngung 20 verfolgt den Zweck, dass sich in Folge Materialschwundes bei einer ohne diese Verjüngung vorgesehenen Materialansammlung im Querschnittsbereich des Kopfes an der Rückseite keine Einfallstellen bilden, weil der Schwund durch die geringere Materialansammlung geringer ist und die Abkühlzeit des Kunststoffes nach dem Spritzgießen verkürzt wird. Die vertikale Verlängerung des tiefsten Punktes des Bodens der Sacklöcher zur Außenfläche der Rückseite 21 des Kopfes definiert die kürzesten Abstände x bzw. y (siehe Fig. 3). Gemäß der vorliegenden Ausführungsform ist für x als kürzesten Abstand zwischen der tiefsten Stelle des Sackloches 12 und der Rückseite 21 eine Distanz von etwa 1 mm vorgesehen. An der Stelle y ist zwischen der tiefsten Stelle des Sackloches 11 und der Rückseite 21 unmittelbar darunter ein kürzester Abstand von etwa 1,2 bis 1,6 mm vorgegeben. Vorteilhafterweise variiert dieser Abstand für alle Sacklöcher des Kopfes zwischen 0,5 bis 2,5 mm oder bevorzugt zwischen 0,8 und 2 mm. Weil diese Bereiche vom Anspritzpunkt unterschiedlich weit entfernt sein können, kann es sinnvoll sein, auch unterschiedliche Distanzen zwischen den tiefsten Böden der Sacklöcher und der Rückseite des Kopfes vorzusehen.

Die Sacklöcher 14 weisen ebenfalls die gleiche Bestopfungstiefe für die Borstenbüschel wie die Sacklöcher 11 und 12 auf. Die Sacklöcher 14 sind seitlich neben dem Hohlraum bzw. Freibereich 9 angeordnet. Die Sacklöcher 13 erstrecken sich weniger tief in den Kopf hinein als die übrigen Sacklöcher. In weiterer Tiefenerstreckung benachbart zu den Sacklöchern 13 ist der Hohlraum 9 ausgebildet (siehe hierzu insbesondere Figur 3 und 4).

Wie insbesondere aus Fig. 1 hervorgeht, ist die Länge der Borstenbüschel vom Boden der Sacklöcher bis zu den Borstenenden im Reinigungsbereich nicht durch die Tiefe der Sacklöcher vorgegeben. Die aus Fig. 1 dennoch erkennbare Topographie mit Höhenunterschieden in den Borstenbüschelendungen wird nach dem Bestopfen der Borstenbüschel in die Sacklöcher durch entsprechendes Zuschneiden der Borstenenden und anschließendes Endverrunden festgelegt. So sind im Kopf, wie in Fig. 4 dargestellt, Borstenbüschel 6b und 6c vorgesehen, die die gleiche Länge zwischen der Reinigungsseite 5 und den Borstenenden aufweisen, sich aber unterschiedlich Tief in den Sacklöchern des Kopfes erstrecken, so dass die Gesamtlänge der Borstenbüschel trotz gleicher Endhöhe verschieden ist.

Wie insbesondere aus Fig. 4 hervorgeht, ist der Hohlraum 9 durch einen Abschlussdeckel 22 dichtend verschlossen. Der Abschlussdeckel 22 ist in der Fig. 3 nicht dargestellt. Der Gegenstand dieser Anmeldung ist unabhängig von der Ausbildung eines Abschlussdeckels 22 oder Hohlräumen 9 im Kopf vorteilhaft nutzbar. Die Ausbildung eines Hohlraumes 9 zusätzlich zu den Sacklöchern erhöht jedoch die innere Komplexität des Kopfes 1, so dass Materialschwund und optische Fehlerfreiheit im Spritzgießprozeß mit den bekannten Herangehensweisen nicht erreichbar ist. Wie aus den Figuren 3 und 4 zudem hervorgeht, sind in vertikaler Verlängerung unterhalb von den Borstenbüscheln an der Rückseite 21 des Kopfes 1 Abschnitte vorgesehen, die nicht mit dem Hohlraum 9 oder dem Deckel 22 fluchten, so dass, insbesondere an diesen Stellen, Einfallstellen durch Materialschwund in Abwesenheit der hier vorgeschlagenen Maßnahmen entstehen könnten.

Gemäß dieser Ausführungsform wird der Kopf aus einer Kunststoffkomponente aus Hartkunststoff, namentlich Polypropylen gespritzt. Der Anspritzpunkt für den Spritzling im Werkzeug befindet sich vorzugsweise im Hals oder Handgriff der Zahnbürste. Alternativ ist der Anspritzpunkt im Kopf vorgesehen. In Abwesenheit einer weiteren Kunststoffkomponente oder insbesondere Weichkunststoffkomponente auf der Rückseite 21 des Kopfes 1 ist bei dieser Ausführungsform ebenfalls keine Möglichkeit gegeben, optische Fehlstellen im Spritzgußprozeß durch einen Weichkunststoff zu kaschieren. Je nach Art der optischen Fehlstelle ist zudem ein Kaschieren mit einem Überspritzen der optisch nicht einwandfreien Bereiche ebenfalls nicht in allen Fällen mögich.

Das Verfahren zur Herstellung der Zahnbürste setzt sich aus den Verfahrensschritten zusammen: Spritzgießen, zumindest des Kunststoffkopfes, ggf. zusammen mit dem Hals oder Handgriffabschnitten, insbesondere mit Polypropylen oder anderen Materialien. Danach wird der Kopf mit Borstenbüscheln 6 bestopft und Anker zur Befestigung der Borstenbüschel in den Kopf eingetrieben. Abschließend erfolgt eine Endbehandlung der Endabschnitte der Borstenbüschel 6 mit dem Zuschneiden der Borstenbüschel auf die richtige Länge bzw. Topographie und Endverrunden und ggf. weitere Endbehandlungsschritte. Falls das elektrisch betreibbare Funktionselement (hier LED) nicht schon im Spritzgießverfahren mit umspritzt wurde, erfolgt die Montage dieses Elements in den Kopf nach den obigen Beborstungsschritten.

## Patentansprüche

1. Zahnbürste die einen Handgriff und einen Halsabschnitt aufweist, der den Handgriff mit einem Kopf (1) verbindet, wobei der Kopf (1) eine Reinigungsseite (5) und gegenüberliegend zu dieser eine Rückseite (21) aufweist, wobei die Reinigungsseite (5) mehrere Borstenbüschel (6) zur Zahnreinigung aufweist, die mit einem Anker (15) durch Bestopfungsöffnungen (10) im Kopf (1) befestigt sind, wobei jeder Bestopfungsöffnung (10) ein Sackloch (11, 12, 13, 14) mit Seitenwandungen (16) und einem Boden (17, 18) zugeordnet ist, wobei die Seitenwandungen (16) die seitlichen Begrenzungsflächen für die Borstenbüschel (6) in den Sacklöchern (11, 12, 13, 14) bilden und einen zylindrischen Körper definieren, und wobei im Übergangsbereich zwischen dem Boden (17, 18) und den Seitenwandungen (16) eine Abschrägung oder Verrundung (19) ausgebildet ist, die einen konisch zulaufenden oder kegelstumpfartigen Abschnitt im Sackloch bildet, wobei ein Querschnittsbereich des Kopfes (1) zwischen einem ersten Boden (17, 18) und der Rückseite (21) relativ zu einem Querschnittsbereich des Kopfes zwischen einem zweiten Boden (17, 18) und der Rückseite (21) unterschiedlich ist und wobei der erste Boden und der zweite Boden (17, 18) derart im Kopf angeordnet sind, dass der kürzeste Abstand y zwischen dem ersten Boden (17, 18) und der Rückseite (21) sowie der kürzeste Abstand x zwischen dem zweiten Boden (17, 18) und der Rückseite (21) jeweils 0,5 bis 2,5 mm beträgt.

2. Zahnbürste nach Anspruch 1, dadurch gekenntzeichnet, dass der erste und der zweite Boden (17, 18) im Kopf (1) derart angeordnet sind, dass der kürzeste Abstand x und y jeweils 0,8 bis 2 mm beträgt.

3. Zahnbürste nach Anspruch 1 oder 2, **dadurch gekennzeichnet, dass** der Kopf (1) dritte und vierte Sacklöcher (11, 12) aufweist, die bis zur gleichen Tiefe mit Borstenbüschel (6a) bestopfbar sind, wobei die dritten und vierten Sacklöcher (11, 12) derart ausgebildet sind, dass sich deren Böden (17, 18) unterschiedlich tief erstrecken.

4. Zahnbürste nach Anspruch 3, **dadurch gekennzeichnet, dass** das vierte Sackloch (12) nach der Abschrägung oder Verrundung (19) eine Verjüngung (20) und daran anschliessend eine weitere Verrundung oder Abschrägung (19) und daran anschliessend den Boden (18) aufweist.

5. Zahnbürste nach zumindest einem der vorangegangenen Ansprüche, **dadurch gekennzeichnet, dass** der Kopf (1) einen ersten Innenbereich und einen zweiten Innenbereich aufweist, wobei der erste Innenbereich (9) aus Hartkunststoff ausgebildet ist und der zweite Innenbereich ein elektrisch betreibbares Funktionselement (4) oder einen Teil davon aufweist.

6. Zahnbürste nach Anspruch 5, **dadurch gekennzeichnet, dass** ein Anspritzpunkt für den Hartkunststoff des Kopfes (1) am Hals oder am Handgriff vorgesehen ist und dass die Sacklöcher (11, 12, 13, 14) relativ zueinander unterschiedlich weit axial entfernt von dem Anspritzpunkt am Kopf (1) angeordnet sind und dass zwischen diesen relativ zueinander unterschiedlich weit angeordneten Sacklöchern (11, 12, 13, 14) im Hartkunststoff des Kopfes (1) ein Freibereich für das Funktionselement (4) vorgesehen ist.

7. Zahnbürste nach einem der Ansprüche 3 bis 6, **dadurch gekennzeichnet, dass** der Kopf zumindest ein fünftes Sackloch (13) aufweist, das benachbart und oberhalb des Funktionselementes (4) angeordnet und kürzer als die dritten und vierten Sacklöcher (11, 12, 14) ausgebildet ist.

8. Zahnbürste nach zumindest einem der vorangegangenen Ansprüche, **dadurch gekennzeichnet, dass** die Rückseite des Kopfes (1) zumindest teilweise aus dem gleichen Hartkunststoff wie die Reinigungsseite (5) ausgebildet ist.

9. Zahnbürste nach zumindest einem der vorangegangenen Ansprüche, **dadurch gekennzeichnet, dass** der Kopf aus einem Hartkunststoff ausgebildet ist, der mehr als 1 % Materialschwund nach einem Spritzgiessverfahren aufweist.

10. Zahnbürste nach zumindest einem der vorangegangenen Ansprüche, **dadurch gekennzeichnet, dass** der Kopf aus Polypropylen Hartkunststoff ausgebildet ist.

11. Zahnbürste nach zumindest einem der Ansprüche 1 bis 9, **dadurch gekennzeichnet, dass** der Kopf aus Polyethylen, POM, SAN oder Copolyester Hartkunststoff ausgebildet ist.

12. Zahnbürste nach zumindest einem der vorangegangenen Ansprüche, **dadurch gekennzeichnet, dass** der Kopf (1) erste und zweite Borstenbüschel (6a, 6b, 6c) mit unterschiedlicher Länge vom Sackloch-Boden (17) bis zum Borstenende aufweist, wobei die ersten und zweiten Borstenbüschel (6a, 6b, 6c) etwa gleiche Länge von der Reinigungsseite (5) bis zum Borstenende aufweisen.

13. Zahnbürste nach zumindest einem der vorangegangenen Ansprüche, **dadurch gekennzeichnet, dass** zumindest ein Sackloch im Kopf vorgesehen ist, dessen Mittelachse winklig zum Lot auf der Reinigungsseite angeordnet ist.

14. Verfahren zur Herstellung einer Zahnbürste nach Anspruch 1 umfassend die Schritte:
- Spritzgießen, zumindest des Kunstsoffkopfes mit oder ohne einen Hals oder Handgriffabschnitten, insbesondere mit Polypropylen,
- Bestopfen des Kopfes mit Borstenbüscheln 6,
- Eintreiben eines Ankers in den Kopf zur Befestigung der Borstenbüschel,
- Endbearbeitung der Endabschnitte der Borstenbüschel 6 mit dem Zuschneiden der Borstenbüschel 6 auf die richtige Länge und Endverrunden

## Claims

1. Toothbrush with a hand grip and a neck section which connects the hand grip to a head (1), wherein the head (1) has a cleaning side (5) and, opposite this, a back side (21); wherein the cleaning side (5) has multiple bristle tufts (6) for dental cleaning which are fastened by an anchor (15) through plug holes (10) in the head (1); wherein each of the plug holes (10) is a blind hole (11, 12, 13, 14) provided with side walls (16) and a floor (17, 18); wherein the side walls (16) form boundary surfaces at the sides for the bristle tufts (6) in the blind holes (11, 12, 13, 14) and define a cylindrical body; and wherein a chamfer or rounded edge (19) is formed in the transitional area between the floor (17, 18) and the side walls (16), which chamfer or rounded edge (19) forms a conically tapering or frustum-like section in the blind hole; wherein a cross-sectional area of the head (1) between a first floor (17, 18) and the back side (21) is different relative to a cross-sectional area of the head between a second floor (17, 18) and the back side (21); and wherein the first floor and the second floor (17, 18) are arranged in the head so that the shortest distance y between the first floor (17, 18) and the back side (21) and the shortest distance x between the second floor (17, 18) and the back side (21) is respectively 0.5 to 2.5 mm.

2. Toothbrush in accordance with Claim 1, **characterized in that** the first and the second floor (17, 18) in the head (1) are arranged so that the shortest clearance x and y is respectively 0.8 to 2 mm.

3. Toothbrush in accordance with Claim 1 or 2, **characterized in that** the head (1) has third and fourth blind holes (11, 12) which can be plugged with bristle tufts (6a) to the same depth, wherein the third and fourth blind holes (11, 12) are designed so that their floors (17, 18) extend to different depths.

4. Toothbrush in accordance with Claim 3, **characterized in that** the fourth blind hole (12) has a taper (20) after the chamfer or rounded edge (19), and following this another rounded edge or chamfer (19), and following this the floor (18).

5. Toothbrush in accordance with at least one of the preceding Claims, **characterized in that** the head (1) has a first internal area and a second internal area, wherein the first internal area (9) is formed from rigid plastic and the second internal area has an electrically operable functional element (4) or a part of the same.

6. Toothbrush in accordance with Claim 5, **characterized in that** an injection point for the rigid plastic of the head (1) is provided at the neck or at the hand grip; and **in that** the blind holes (11, 12, 13, 14) are arranged axially at different distances (relative to one another) from the injection point on the head (1); and **in that** a free space is provided for the functional element (4) between these blind holes (11, 12, 13, 14) arranged at different distances relative to one another in the rigid plastic of the head (1).

7. Toothbrush in accordance with one of the Claims 3 to 6, **characterized in that** the head has at least one fifth blind hole (13) which is arranged adjacent to and above the functional element (4) and which is designed to be shorter than the third and fourth blind holes (11, 12, 14).

8. Toothbrush in accordance with at least one of the preceding Claims, **characterized in that** the back side of the head (1) is at least partially formed from the same rigid plastic as the cleaning side (5).

9. Toothbrush in accordance with at least one of the preceding Claims, **characterized in that** the head is formed from a rigid plastic which exhibits more than 1% material shrinkage following an injection molding process.

10. Toothbrush in accordance with at least one of the preceding Claims, **characterized in that** the head is formed from rigid polypropylene plastic.

11. Toothbrush in accordance with at least one of the Claims 1 to 9, **characterized in that** the head is formed from polyethylene, POM, SAN or rigid copolyester plastic.

12. Toothbrush in accordance with at least one of the preceding Claims, **characterized in that** the head (1) has first and second bristle tufts (6a, 6b, 6c) with different lengths from the blind hole floor (17) to the end of the bristles, wherein the first and second bristle tufts (6a, 6b, 6c) are of approximately the same length from the cleaning side (5) to the end of the bristles.

13. Toothbrush in accordance with at least one of the preceding Claims, **characterized in that** at least one blind hole is provided in the head, the central axis of which blind hole is arranged at an angle to the perpendicular on the cleaning side.

14. Method for manufacturing a toothbrush in accordance with Claim 1, including the following steps:
- injection molding, at least of the plastic head with or without a neck or hand grip sections, in particular using polypropylene,
- plugging the head with bristle tufts 6,
- driving an anchor into the head to fasten the bristle tufts,
- final machining of the end sections of the bristle tufts 6, with cutting of the bristle tufts 6 to the right length and rounding the ends.

## Revendications

1. Brosse à dents présentant une poignée et une section de col, qui relie la poignée à une tête (1), la tête (1) présentant un côté de nettoyage (5) et, à l'opposé de celui-ci, un côté arrière (21), le côté de nettoyage (5) présentant plusieurs touffes de soies (6) pour le nettoyage des dents, qui peuvent être fixées à l'aide d'une ancre (15) via des trous à colmater (10) dans la tête (1), chaque trou à colmater (10) étant associé à un trou aveugle (11, 12, 13, 14) présentant des parois latérales (16) et un fond (17, 18), les parois latérales (16) formant les surfaces de délimitation latérale pour les touffes de soies (6) dans les trous aveugles (11, 12, 13, 14) et définissant un corps cylindrique, et une partie en biais ou un arrondi (19) étant réalisé(e) dans la zone de transition entre le fond (17, 18) et les parois latérales (16), qui forme une section se rétrécissant de manière conique ou de type tronconique dans le trou aveugle, une zone transversale de la tête (1) entre un premier fond (17, 18) et le côté arrière (21) étant différente par rapport à une zone transversale de la tête entre un deuxième fond (17, 18) et le côté arrière (21) et le premier fond et le deuxième fond (17, 18) étant disposés dans la tête de manière telle que la distance y la plus courte entre le premier fond (17, 18) et le côté arrière (21) ainsi que la distance x la plus courte entre le deuxième fond (17, 18) et le côté arrière (21) valent à chaque fois 0,5 à 2,5 mm.

2. Brosse à dents selon la revendication 1, **caractérisée en ce que** le premier fond et le deuxième fond (17, 18) sont disposés dans la tête (1) de manière telle que la distance la plus courte x et y valent à chaque fois 0,8 à 2 mm.

3. Brosse à dents selon la revendication 1 ou 2, **caractérisée en ce que** la tête (1) présente des troisièmes et des quatrièmes trous aveugles (11, 12), qui peuvent être colmatés à la même profondeur par des touffes de soies (6a), les troisièmes et les quatrièmes trous aveugles (11, 12) étant réalisés de manière telle que leurs fonds (17, 18) s'étendent sur une profondeur différente.

4. Brosse à dents selon la revendication 3, **caractérisée en ce que** le quatrième trou aveugle (12) présente, après la partie en biais ou l'arrondi (19), un rétrécissement (20) et consécutivement à celui-ci un autre arrondi ou une autre partie en biais (19) et, consécutivement, le fond (18).

5. Brosse à dents selon au moins l'une quelconque des revendications précédentes, **caractérisée en ce que** la tête (1) présente une première zone interne et une deuxième zone interne, la première zone interne (9) étant réalisée en matériau synthétique dur et la deuxième zone interne présentant un élément fonctionnel (4) pouvant être actionné de manière électrique ou une partie de celui-ci.

6. Brosse à dents selon la revendication 5, **caractérisée en ce qu'**il existe un point d'injection pour le matériau synthétique dur de la tête (1) au niveau du col ou au niveau de la poignée et **en ce que** les trous aveugles (11, 12, 13, 14) sont disposés sur la tête (1), les uns par rapport aux autres, à une distance axiale différente du point d'injection et **en ce qu'**une zone libre pour l'élément fonctionnel (4) est prévue entre ces trous aveugles (11, 12, 13, 14) disposés les uns par rapport aux autres, à une distance différente dans le matériau synthétique dur de la tête (1).

7. Brosse à dents selon l'une quelconque des revendications 3 à 6, **caractérisée en ce que** la tête présente au moins un cinquième trou aveugle (13), qui est disposé à côté et au-dessus de l'élément fonctionnel (4) et qui est réalisé de manière plus courte que les troisièmes et les quatrièmes trous aveugles (11, 12, 14).

8. Brosse à dents selon au moins l'une quelconque des revendications précédentes, **caractérisée en ce que** le côté arrière de la tête (1) est réalisé au moins partiellement en le même matériau synthétique dur que le côté de nettoyage (5).

9. Brosse à dents selon au moins l'une quelconque des revendications précédentes, **caractérisée en ce que** la tête est réalisée en un matériau synthétique dur qui présente un retrait de matériau supérieur à 1 % après un procédé de moulage par injection.

10. Brosse à dents selon au moins l'une quelconque des revendications précédentes, **caractérisée en ce que** la tête est réalisée en un matériau synthétique dur de type polypropylène.

11. Brosse à dents selon au moins l'une quelconque des revendications 1 à 9, **caractérisée en ce que** la tête est réalisée en un matériau synthétique dur de type polyéthylène, POM, SAN ou copolyester.

12. Brosse à dents selon au moins l'une quelconque des revendications précédentes, **caractérisée en ce que** la tête (1) présente des premières et des deuxièmes touffes de soies (6a, 6b, 6c) présentant une longueur différente du fond (17) du trou aveugle jusqu'à l'extrémité des soies, les premières et les deuxièmes touffes de soies (6a, 6b, 6c) présentant environ la même longueur à partir du côté de nettoyage (5) jusqu'à l'extrémité des soies.

13. Brosse à dents selon au moins l'une quelconque des revendications précédentes, **caractérisée en ce qu'**au moins un trou aveugle est prévu dans la tête, dont l'axe central est disposé sous un angle par rapport à la perpendiculaire sur le côté de nettoyage.

14. Procédé pour la fabrication d'une brosse à dents selon la revendication 1 comprenant les étapes consistant à :
- mouler par injection, au moins la tête en matériau synthétique avec ou sans col ou sections de poignée, en particulier en polypropylène,
- colmater la tête par les touffes de soies 6
- enfoncer une ancre dans la tête en vue de la fixation des touffes de soies
- finir les sections d'extrémité des touffes de soies 6 par la découpe des touffes de soies 6 à la bonne longueur et aux arrondis finaux corrects.
